# EUROPEAN PATENT APPLICATION

(11) **EP 4 813 499 A2**
(43) Date of publication of application: **30.09.2026**
(21) Application number: 25222211.2
(22) Date of filing: 10.12.2025
(51) Int. Cl.: B01D 53/04, B01D 53/047, G06N 3/08, G06N 3/044, G06N 20/00

(54) **METHODS AND SYSTEMS FOR REAL-TIME MONITORING AND OPTIMIZATION OF A PACKED BED COLUMN**

(30) Priority: 28.01.2025 IN 202521006986
(71) Applicant: Tata Consultancy Services Limited, Maharashtra (IN)
(72) Inventor: BADHAN, Navneet Singh, 201309 Noida, Uttar Pradesh (IN); CHAUDHARY, Ayush, 201309 Noida, Uttar Pradesh (IN); SUHAIL, Mohammed, 411057 Pune, Maharashtra (IN); SUBRAMANIAN, Sivakumar, 411057 Pune, Maharashtra (IN); RUNKANA, Venkataramana, 411028 Pune, Maharashtra (IN); RAO, Davuluri Prahlada, 500049 Hyderabad, Telangana (IN)
(74) Representative: Goddar, Heinz J.

(57) **Abstract**

The disclosure generally relates to methods and systems for real-time monitoring and optimization of a packed bed column. Conventional techniques for the packed bed simulation in the literature are very limited which employ fundamental physics-based models such as Ergun and Darcy models in conjunction with fixed feed inlet velocity boundary condition, resulting in erroneous predictions. The present disclosure constructs a digital twin of the physical packed bed column by predicting state parameters in a spatio-temporal domain inside the packed bed column, using first principle-based model, a data-driven model, a knowledge driven model, or a combination thereof. The one or more state variables and state parameters are then processed to determine and optimize the one or more key performing indicators (KPIs) of a process and each of one or more process steps of the process. The obtained digital twin is then used for monitoring the physical packed bed column in real-time.

## Description

### CROSS-REFERENCE TO RELATED APPLICATIONS AND PRIORITY

The present application claims priority from Indian application no. 202521006986, filed on January 28, 2025.

### TECHNICAL FIELD

The disclosure herein generally relates to packed bed columns, and, more particularly, to methods and systems for real-time monitoring and optimization of packed bed columns used for gas separation, processing, and so on.

### BACKGROUND

Many combustion processes produce flue gas containing gases such as carbon dioxide (*CO*₂) that contribute to global warming. To meet the Paris agreement of limiting the global temperature rise to 1.5 degrees, many measures have been taken for transitioning from non-renewable to renewable energy sources. One of the most challenging tasks of this transition is lowering *CO*₂ emissions from the transport sector. Considering the challenges associated with alternative fuels and electrification for heavy-duty trucks and container ships, carbon capture through adsorption emerges as an effective technique for removing the *CO*₂ from effluent gas streams.

Carbon capture via adsorption in a fixed packed bed column is a widely practiced industrial process. Adsorption is a solid-gas system in which gas molecules selectively adhere to the surface of solid where the adsorption employs various techniques comprising vacuum swing adsorption (VSA), pressure swing adsorption (PSA), temperature swing adsorption (TSA), concentration swing adsorption (CSA) or a combination thereof such as pressure temperature swing adsorption (PTSA) to regenerate the packed bed, thus facilitating a gas separation.

A packed bed typically consists of a cylindrical vessel filled with packing material. The packing material can be made of small, randomly oriented particles such as beads or structured materials such as monolith and laminate. In a packed bed column, one or more fluid phase pass through the packing material that provides a large surface area and pathways for the fluid, enhancing contact between the phases and improving mass and heat transfer characteristics for the transfer process. In addition to adsorption, the different applications of packed bed also include absorption, conducting reactions between phases, and thermal energy storage for applications such as industrial heat recovery and residential or commercial heating and cooling systems. The packed bed can hence be employed for natural gas purification to remove impurities such as *CO*₂, hydrogen sulfide (*H₂S*) and water vapor, air separation to obtain high-purity oxygen or nitrogen, hydrogen purification to obtain hydrogen (*H*₂) for fuel cells, and air purification to remove toxic gases such as ammonia, chlorine and sulfur compounds from air.

Simulating the packed bed column for real-time monitoring plays a vital role in optimizing the process performance during the industrial operations. This monitoring is far more critical for carbon removal from mobile medium in which the operating conditions such as flue gas temperature, concentration and flowrate fluctuate rapidly with time. Conventional techniques for the packed bed simulation in the literature typically use physics-based models to capture the process dynamics. These models compute/predict different state parameters such as velocity of the fluid inside the packed column for a known pressure drop by relating the pressure drop along the column to the velocity of the gas through the well-known models such as Ergun equation.

These techniques typically fix the feed inlet velocity to the packed bed column and use this feed velocity to calculate the pressure at the inlet, along with values of other state variables such as phase temperature and concentration at the column inlet. Employing the fixed inlet velocity formulation while using the Ergun equation for momentum balance to simulate flow of gas initiates a positive feedback loop which keeps increasing the value of the inlet pressure during simulation to extremely high and unrealistic values. This loop is particularly evident in simulations involving very high feed rates to the packed bed column, often causing the solution to diverge. While the Ergun equation is suitable for modelling momentum balance for low feed velocity, it results in convergence failure for a broad range of gas velocities or flow rates. Thus, the conventional techniques for the simulation and the real-time monitoring of the packed bed column are neither accurate nor effective in predicting the various state parameters, resulting in unreliable predictions.

### SUMMARY

Embodiments of the present disclosure present technological improvements as solutions to one or more of the above-mentioned technical problems recognized by the inventors in conventional systems.

In an aspect, a processor-implemented method for real-time monitoring and optimization of a packed bed column is provided. The method comprising: collecting an input data of a packed bed column at an initial state with a predefined configuration, using one or more input data retrieval techniques, wherein the input data of the packed bed column comprises one or more of (i) an inlet temperature of a feed gas, (ii) an inlet pressure of the feed gas, (iii) one or more properties of each of one or more components of the feed gas, and (iv) an outlet pressure of a gas at an exit of the packed bed column, wherein the predefined configuration includes one or more of (i) one or more adsorbent properties, (ii) one or more gas properties, and (iii) one or more column dimensions and one or more column properties, and wherein the one or more gas properties comprise (i) a gas temperature, (ii) a gas composition, and (iii) a gas pressure; pre-processing the input data of the packed bed column using one or more data processing techniques to obtain a pre-processed input data of the packed bed column, wherein the pre-processed input data comprises one or more of (i) a pre-processed inlet temperature of the feed gas, (ii) a pre-processed inlet pressure of the feed gas, (iii) one or more pre-processed properties of each of one or more components of the feed gas, and (iv) a pre-processed outlet pressure of the gas at the exit of the packed bed column; predicting one or more state parameters in a spatio-temporal domain inside the packed bed column using a first trained prediction model and a second trained prediction model, based on the pre-processed input data, wherein the one or more state parameters comprise an adsorbent temperature, one or more adsorbate concentrations on the adsorbent, the gas temperature, the gas composition, the gas pressure, a gas velocity, a wall temperature of the packed bed column, and the temperature of a jacket enclosing the packed bed column; post-processing the one or more state parameters to determine one or more key performing indicators (KPIs) of a process and each of one or more process steps of the process associated with the packed bed column, wherein the one or more KPIs are (i) an energy consumption, (ii) a recovery, and (iii) a purity; optimizing the one or more KPIs of the process and each of the one or more process steps of the process by varying one or more process parameters of the process, wherein the one or more process parameters comprises a process step-time, a regeneration temperature, a feed gas inlet temperature, a feed gas inlet pressure, and an evacuation pressure; monitor in real-time periodically the packed bed column, based on a current state and the one or more process parameters of the process; and fine-tuning one or more tuning parameters of the packed bed column, when a deviation is observed during the monitoring, wherein the one or more tuning parameters comprising a heat transfer coefficient, a mass transfer coefficient, and the predefined configuration.

In another aspect, a system for real-time monitoring and optimization of a packed bed column is provided. The system includes: a memory storing instructions; one or more Input/Output (I/O) interfaces; and one or more hardware processors coupled to the memory via the one or more I/O interfaces, wherein the one or more hardware processors are configured by the instructions to: collect an input data of a packed bed column at an initial state with a predefined configuration, using one or more input data retrieval techniques, wherein the input data of the packed bed column comprises one or more of (i) an inlet temperature of a feed gas, (ii) an inlet pressure of the feed gas, (iii) one or more properties of each of one or more components of the feed gas, and (iv) an outlet pressure of a gas at an exit of the packed bed column, wherein the predefined configuration includes one or more of (i) one or more adsorbent properties, (ii) one or more gas properties, and (iii) one or more column dimensions and one or more column properties, and wherein the one or more gas properties comprise (i) a gas temperature, (ii) a gas composition, and (iii) a gas pressure; pre-process the input data of the packed bed column using one or more data processing techniques to obtain a pre-processed input data of the packed bed column, wherein the pre-processed input data comprises one or more of (i) a pre-processed inlet temperature of the feed gas, (ii) a pre-processed inlet pressure of the feed gas, (iii) one or more pre-processed properties of each of one or more components of the feed gas, and (iv) a pre-processed outlet pressure of the gas at the exit of the packed bed column; predict one or more state parameters in a spatio-temporal domain inside the packed bed column using a first trained prediction model and a second trained prediction model, based on the pre-processed input data, wherein the one or more state parameters comprise an adsorbent temperature, one or more adsorbate concentrations on the adsorbent, the gas temperature, the gas composition, the gas pressure, a gas velocity, a wall temperature of the packed bed column, and the temperature of a jacket enclosing the packed bed column; post-process the one or more state parameters to determine one or more key performing indicators (KPIs) of a process and each of one or more process steps of the process associated with the packed bed column, wherein the one or more KPIs are (i) an energy consumption, (ii) a recovery, and (iii) a purity; optimize the one or more KPIs of the process and each of the one or more process steps of the process by varying one or more process parameters of the process, wherein the one or more process parameters comprises a process step-time, a regeneration temperature, a feed gas inlet temperature, a feed gas inlet pressure, and an evacuation pressure; monitor in real-time periodically the packed bed column, based on a current state and the one or more process parameters of the process; and fine-tune one or more tuning parameters of the packed bed column, when a deviation is observed during the monitoring, wherein the one or more tuning parameters comprising a heat transfer coefficient, a mass transfer coefficient, and the predefined configuration.

In yet another aspect, there are provided one or more non-transitory machine-readable information storage mediums comprising one or more instructions which when executed by one or more hardware processors cause: collecting an input data of a packed bed column at an initial state with a predefined configuration, using one or more input data retrieval techniques, wherein the input data of the packed bed column comprises one or more of (i) an inlet temperature of a feed gas, (ii) an inlet pressure of the feed gas, (iii) one or more properties of each of one or more components of the feed gas, and (iv) an outlet pressure of a gas at an exit of the packed bed column, wherein the predefined configuration includes one or more of (i) one or more adsorbent properties, (ii) one or more gas properties, and (iii) one or more column dimensions and one or more column properties, and wherein the one or more gas properties comprise (i) a gas temperature, (ii) a gas composition, and (iii) a gas pressure; pre-processing the input data of the packed bed column using one or more data processing techniques to obtain a pre-processed input data of the packed bed column, wherein the pre-processed input data comprises one or more of (i) a pre-processed inlet temperature of the feed gas, (ii) a pre-processed inlet pressure of the feed gas, (iii) one or more pre-processed properties of each of one or more components of the feed gas, and (iv) a pre-processed outlet pressure of the gas at the exit of the packed bed column; predicting one or more state parameters in a spatio-temporal domain inside the packed bed column using a first trained prediction model and a second trained prediction model, based on the pre-processed input data, wherein the one or more state parameters comprise an adsorbent temperature, one or more adsorbate concentrations on the adsorbent, the gas temperature, the gas composition, the gas pressure, a gas velocity, a wall temperature of the packed bed column, and the temperature of a jacket enclosing the packed bed column; post-processing the one or more state parameters to determine one or more key performing indicators (KPIs) of a process and each of one or more process steps of the process associated with the packed bed column, wherein the one or more key KPIs are (i) an energy consumption, (ii) a recovery, and (iii) a purity; optimizing the one or more KPIs of the process and each of the one or more process steps of the process by varying one or more process parameters of the process, wherein the one or more process parameters comprises a process step-time, a regeneration temperature, a feed gas inlet temperature, a feed gas inlet pressure, and an evacuation pressure; monitoring in real-time periodically the packed bed column, based on a current state and the one or more process parameters of the process; and fine-tuning one or more tuning parameters of the packed bed column, when a deviation is observed during the monitoring, wherein the one or more tuning parameters comprising a heat transfer coefficient, a mass transfer coefficient, and the predefined configuration.

In an embodiment, predicting the one or more state parameters in the spatio-temporal domain inside the packed bed column, comprising: passing the pre-processed input data to the first trained prediction model to obtain a feed gas inlet velocity; and passing the pre-processed input data, the feed gas inlet velocity, and one or more tuning parameters, to the second trained prediction model, to obtain the one or more state parameters in the spatio-temporal domain inside the packed bed column.

In an embodiment, the first trained prediction model is obtained by: generating a first training input data of the packed bed column using one or more of (i) one or more experiments, and (ii) a physics-based technique, wherein the training input data comprises (i) the inlet temperature of the feed gas, (ii) the inlet pressure of the feed gas, (iii) the one or more properties of each of one or more components of the feed gas, (iv) the outlet pressure of the gas at the exit of the packed bed column, and (v) a labeled feed gas inlet velocity; and training a first neural network model with the first training input data of the packed bed column to obtain the first trained prediction model.

In an embodiment, the second trained prediction model is obtained by: generating a second training input data of the packed bed column using one or more of (i) one or more experiments, and (ii) a physics-based technique, wherein the second training input data comprises (i) the inlet temperature of the feed gas, (ii) the inlet pressure of the feed gas, (iii) the one or more properties of each of one or more components of the feed gas, (iv) the outlet pressure of the gas at the exit of the packed bed column, (v) the feed gas inlet velocity, (vi) the one or more tuning parameters, and (viii) one or more labelled state parameters; and training a second neural network model with the second training input data of the packed bed column to obtain the second trained prediction model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for real-time monitoring and optimization of a packed bed column, in accordance with some embodiments of the present disclosure.
FIG. 2A is an exemplary block diagram illustrating modules of the system of FIG. 1, for real-time monitoring and optimization of a packed bed column, in accordance with some embodiments of the present disclosure.
FIG. 2B shows an exemplary packed bed column with a predefined length L, in accordance with some embodiments of the present disclosure.
FIGS. 3A and 3B illustrate exemplary flow diagrams of a processor-implemented method for real-time monitoring and optimization of a packed bed column, using the system of FIG. 1, in accordance with some embodiments of the present disclosure.
FIG. 4 is a flow diagram showing steps for predicting the one or more state parameters in a spatio-temporal domain inside the packed bed column, in accordance with some embodiments of the present disclosure.
FIG. 5 is a flow diagram showing steps for obtaining a first trained prediction model, in accordance with some embodiments of the present disclosure.
FIG. 6 is a flow diagram showing steps for obtaining a second trained prediction model, in accordance with some embodiments of the present disclosure.
FIG. 7 shows an exemplary setup for real-time monitoring and optimization of a packed bed column, in accordance with some embodiments of the present disclosure.
FIG. 8 shows an exemplary setup for real-time monitoring and optimization of a packed bed column with *CO*₂ concentration analyzer, and pressure and temperature sensors at the column inlet and outlet in addition to temperature sensors along the length of the column, in accordance with some embodiments of the present disclosure.
FIGS. 9A-9C are graphs showing typical gas concentration, gas temperature, and solid concentration profiles, respectively, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Most combustion processes produce flue gases containing gases such as carbon dioxide (*CO*₂) that contribute to global warming. To meet the Paris commitment of limiting the global temperature rise to 1.5 degrees, many measures have been taken for transitioning from non-renewable to renewable energy sources. One of the most challenging tasks of this transition is lowering *CO*₂ emissions from the transport sector. Currently, measures taken to reduce *CO*₂ emissions in the transportation sector includes use of alternative fuels, such as biofuels, natural gas (NG), liquefied petroleum gas (LPG), and hydrogen (*H*₂), reduction of fuel consumption through improved engine efficiency by using eco-driven technologies, and optimization of the engine energy-balance which involves transforming waste heat flows through Organic Rankine Cycle (ORC).

Vehicle electrification is another way by which *CO*₂ emissions from the transport sector could be reduced. While greener solutions like electrification may be practical for passenger and smaller vehicles, larger vehicles such as heavy-duty trucks that ply long distances on a single fill, and container ships still use carbonaceous fuels. In this context, carbon capture through adsorption in the packed bed column emerges as an effective method for removing the *CO*₂ from effluent gas streams. However, this technology substantially increases both capital and operating costs, affecting the overall economic viability of the transport system. Additionally, dynamic factors such as fluctuating flue gas concentration, temperature, and flow rate continuously shift the process optimum with respect to key performance indicators, further straining the economics of the operation. Thus, the present technologies for limiting the harmful gases have: (a) low efficiency of the carbon capture process due to dynamic operating conditions, (b) poor performance indicators, (c) high cost of the process with respect to operations and maintenance, and (d) low process and adsorbent life.

A packed bed column is a type of chemical reactor, or a separation device used for various industrial operations/processes such as absorption, adsorption, conducting reactions between phases, and thermal energy storage. The packed bed column consists typically of a cylindrical vessel filled with packing material. The packing material is a solid material, which can be made of small, randomly oriented particles such as beads or structured materials such as monolith and laminate. In the packed bed column, one or more fluid phases pass through the packing material where the packing creates a large surface area and pathways for the fluid, enhancing contact between the phases and improving mass or heat transfer characteristics for the transfer process.

The solid material may be active material, as used for gas separation via adsorption, or inert, as used for thermal energy storage, depending upon the industrial operation/process where the packed bed is employed. For example, in the petrochemical industry, the packed bed column can be applied for gas separation using adsorption, where the molecules of the heavy (more adsorbing) component of the gaseous mixture preferably adhere to the surface of the sorbent, thus separating the target gas from the gaseous mixture. The sorbent is then regenerated by creating pressure, temperature, or concentration conditions to release the target gas from its surface and preparing the bed for the next cycle of adsorption.

The packed bed column is used in different application fields such as chemical engineering, petrochemical industry, and environmental engineering based on the different industrial operations/processes intended. For example, the packed bed column is used to produce high-purity oxygen or nitrogen from air, separate *CO*₂ from flue gas exhaust from various industries such as cement plant, power plant and automobiles, recover helium, and remove moisture from air. The packed bed column is also used as a catalytic reactor in petrochemical and chemical industries for catalytic reactions such as synthesis of ammonia, methanol and various hydrocarbons. It is also used for hydrogenation of vegetable oils or dehydrogenation of hydrocarbon. Thermal energy received from the sun can also be stored in the packed bed column. This thermal energy is cyclically (periodically) recovered to be used as thermal energy or converted to other forms of energy such as electricity.

Feed mass flow monitoring is crucial in a packed bed column since it dictates the amount of gas fed into the column at each step in the process, significantly affecting one or more process key performance indicators (KPIs). This control becomes even more critical for applications involving carbon capture from mobile sources since the flue gas properties, including gas composition of components such as moisture, nitric oxides (*NOₓ*) and sulfur oxides (*SOₓ*), and gas temperature, from the vehicle exhaust is not constant and varies as per the engine's operating conditions, which are influenced by several parameters such as vehicle acceleration, air-fuel ratio, and road and atmospheric conditions. Furthermore, this control is crucial in other gas separation processes such as air separation to produce high purity oxygen used in hospitals, hydrogen purification to obtain hydrogen (*H*₂) for fuel cells, dehydration of air, helium extraction for scientific applications and ammonia separation for fertilizers. The mass flow control formulation used in the monitoring system emulates the operation of the flow control valve which is used to maintain a constant or a given feed flow to the packed bed.

Thus, simulating the packed bed column for real-time monitoring plays a vital role in optimizing the performance during the industrial operation/process execution. Conventional techniques for the packed bed simulation in the literature typically employ physics-based models, using Ergun equation to model conservation of momentum. These techniques typically fix the feed inlet velocity to the column and use this feed velocity to calculate the pressure at the inlet, along with values of other state variables such as phase temperature and concentration at the column inlet. These models may not be accurate especially for cases involving high feed flowrate, and hence not effective in predicting the various state parameters.

The present disclosure solves the technical problems in the art for real-time monitoring and optimization of a packed bed column. The methods and systems of the present disclosure construct a digital twin (replica) of the physical packed bed column using first principle-based model, a data-driven model, a knowledge driven model, or a combination thereof. The obtained digital twin is then used for monitoring the physical packed bed column in real-time.

The keywords such as packed bed column, packed bed are interchangeably used based on the context of the present disclosure. Further, the nomenclature below is used in the present disclosure: *aₚ* refer to specific surface area of adsorbent particle [*m²*/*m³*]*, A* refer to cross-sectional area of the column [*m²*]*, A_{f}* refer to cross-sectional area of the thermal fluid flow [*m²*]*,* c refer to fluid phase concentration [*mol*/*m³*]*, Cₚₐ* refer to specific heat capacity of adsorbed phase [*J*/*mol - K*], *C_{pg}* refer to specific heat capacity of gas phase [*J*/*mol* - *K*], *Cₚₛ* refer to specific heat capacity of solid phase [*J*/*kg*] *- K], C_{pw}* refer to specific heat capacity of column wall [*J*/*kg*] *- K*], *C_{p,jac}* refer to specific heat capacity of jacket fluid [*J*/*kg*] *- K*], *dₚ* refer to adsorbent particle diameter [*m*], *D_{L}* refer to axial dispersion coefficient [*m²*/*s*], E refer to energy [*J*], *f_{PD}* refer to viscous dissipation [*N*/*m³*], *h_{f}* refer to film heat transfer coefficient [*W*/*m²* - *K*], *hᵢₙ* refer to heat transfer coefficient for energy exchange between gas and column wall [*W*/*m²* - *K*], *h_{jac}* refer to heat transfer coefficient for energy exchange between jacket and ambient air [*W*/*m² - K*], *hₒᵤₜ* refer to heat transfer coefficient for energy exchange between column wall and jacket [*W*/*m² - K*], *k* refer to LDF mass transfer coefficient [1/*s*], *k_{w}* refer to thermal conductivity of column wall [*W*/*m* - *K*], *k_{g}* refer to effective thermal conductivity of gas [*W*/*m - K*], *L* refer to column length [*m*], *ṁ* refer to mass flowrate [*kg*/*s*], *M* refer to molecular mass [*kg*/*mol*], *P* refer to pressure [*Pa*], *q* refer to solid phase concentration [*kg*/*mol*], *q** refer to equilibrium solid phase concentration [*kg*/*mol*], *rᵢₙ* refer to inner radius of column [*m*], *rₒᵤₜ* refer to outer radius of column [*m*], *r_{jac}* refer to radius of jacket [*m*], *R* refer to universal gas constant [*J*/*mol* - *K*], *t* refer to time [*s*], *T_{g}* refer to gas phase temperature [*K*], *Tₛ* refer to solid phase temperature [*K*], *T_{w}* refer to column wall temperature [*K*], *T_{jac}* refer to jacket fluid temperature [*K*], *T_{amb}* refer to ambient temperature [*K*], *v* refer to interstitial gas velocity *[m*/*s], v_{jac}* refer to velocity of thermal exchange jacket fluid [*m*/*s*], *y* refer to gas phase concentration [*mole*/*mole*], *z* refer to bed coordinate [*m*], *ε_{c}* refer to column void, *γ* refer to adiabatic constant, Δ*H* refer to heat of adsorption [*J*], *θ* refer to binary variable indicating direction of migration of gas components, *η* refer to equipment efficiency, *µ* refer to fluid viscosity [*kg*/*m* - *s], ρ_{g}* refer to gas phase density [*mol*/*m³*], *ρ_{P}* refer to adsorbent particle density [*kg*/*m³*], *ρₛ* refer to solid phase density [*kg*/*m³*], *ρ_{w}* refer to column wall density [*kg*/*m³*], *ρ_{bed}* refer to packed bed density [*kg*/*m³*], and *ρ_{jac}* refer to jacket fluid density [*kg*/*m³*]. Further, *i* is a subscript refer to index of component, in is a subscript refer to into the column, *out* is a subscript refer to out of the column, *acc* is a subscript refer to accumulated, *gen* is a subscript refer to generated, *jac* is a subscript refer to jacket, *initial* is a subscript refer to initial state, *final* is a subscript refer to final state, *atm* is a subscript refer to atmospheric, and *regen* is a subscript refer to regeneration.

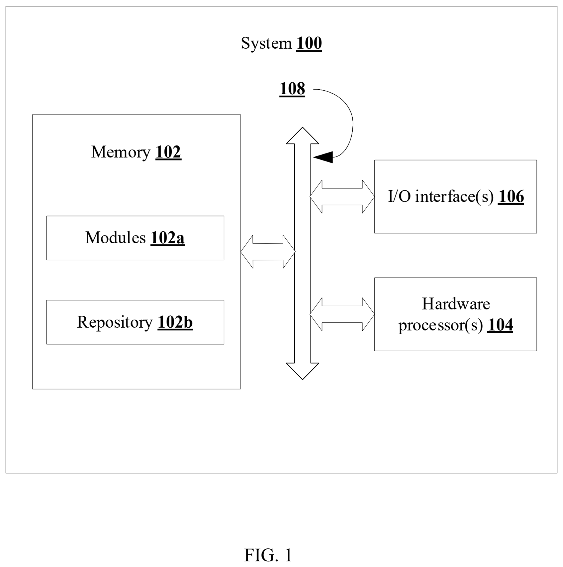

Referring now to the drawings, and more particularly to FIG. 1 through FIG. 9C, where similar reference characters denote corresponding features consistently throughout the figures, there are shown preferred embodiments, and these embodiments are described in the context of the following exemplary systems and/or methods.

FIG. 1 is an exemplary block diagram of a system 100 for real-time monitoring and optimization of a packed bed column, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

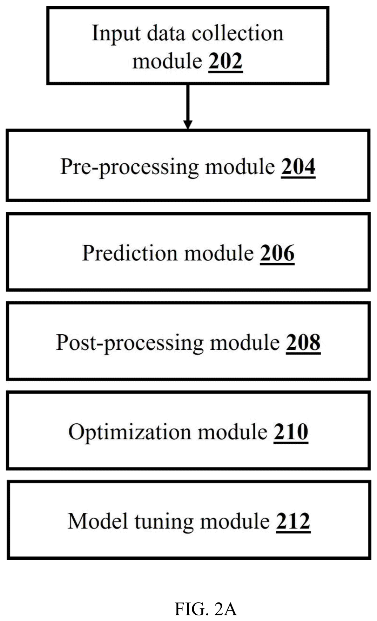

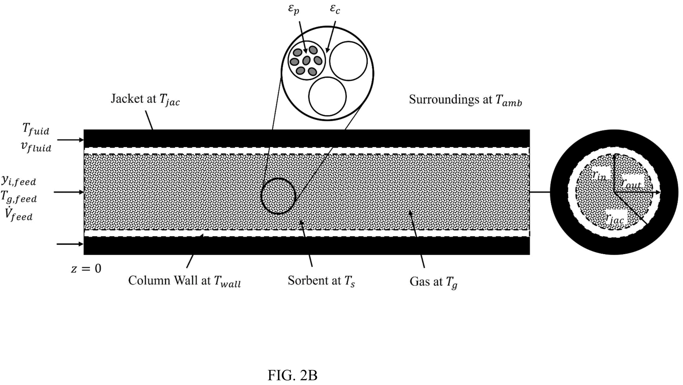

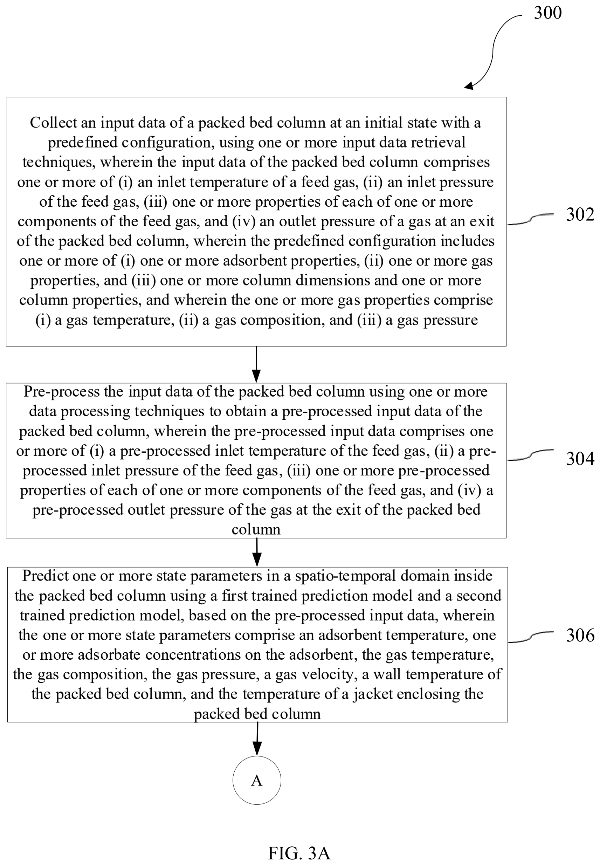

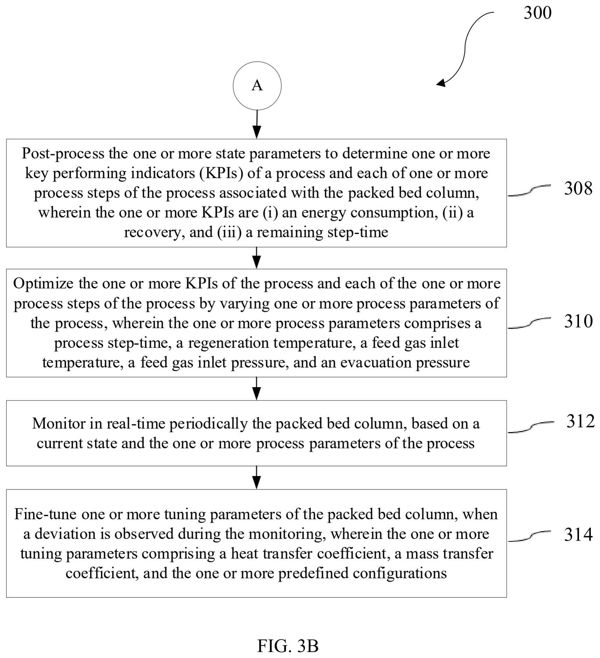

Referring collectively to FIGS. 2A and 2B, and FIGS. 3A and 3B, components and functionalities of the system 100 are described in accordance with an example embodiment of the present disclosure. For example, FIG. 2A is an exemplary block diagram illustrating the plurality of modules 102a of the system 100 of FIG. 1, for real-time monitoring and optimization of a packed bed column, in accordance with some embodiments of the present disclosure. In an embodiment, the plurality of modules 102a include an input data collection module 202, a pre-processing module 204, a prediction module 206, a post-processing module 208, an optimization module 210, and a model tuning module 212.

In accordance with the present disclosure, the input data collection module 202 is configured to collect input data of a packed bed column which is to be monitored through the simulation. The input data of the packed bed column is the input data of packed bed temperature, feed properties such as temperature, concentration of various components and flowrate, and the temperature of the column, and a process specification data defined by the user. The flowrate is used to detect anomaly in the packed bed column or reconcile the prediction process. The process specification data includes one or more of: adsorbent properties, column properties, and column gas properties.

In accordance with the present disclosure, the pre-processing module 204 is configured to refine the input data of the packed bed column by the input data collection module 202. The pre-processing module 204 performs a series of operations that includes but is not limited to: synchronizing the data coming from the multiple sources at various frequencies, cleaning the data by recognizing and removing the outliers, augmenting the removed data, and transforming the processed data into a suitable format as per the requirements of the prediction module 206.

In accordance with the present disclosure, the prediction module 206 is configured to processes the data from the pre-processing unit 204 to determine the values of relevant state variables such as phase temperature and concentration, gas pressure, and gas velocity inside the packed bed column by capturing the dynamics of the process over a user specified period. The prediction module 206 can be a first principle-based model, a data-driven model, a knowledge driven model, or a combination thereof. For example, the prediction module 206 may determine the phase temperature and concentration using the mass, energy and momentum balance models with tuning parameters such as heat and mass transfer coefficients, and reaction kinetics constants. In another example, the prediction module 206 may determine the above-mentioned parameters by leveraging artificial intelligence (AI) such as Physics Inspired Neural Network (PINN) and Artificial Neural Network (ANN) that is suitably trained to accurately capture the process dynamics.

In one embodiment, the prediction module 206 can be built using physics-based modelling. Table 1 shows a set of governing equations used in the physics-based model. As a computational fluid dynamics study, these equations are numerically solved to predict state variables by applying discretized form of the equations at each point in the discretized domain. The set of governing equations can be conveniently solved using numerical techniques in coding languages such as Python by employing open-source libraries. These equations can also be solved using commercial software to predict state variables as a function of time and space. Inputs to this model include column dimensions, and data on packing material such as density, specific heat capacity. In applications involving adsorption on the packed bed, additional information such as adsorbent isotherm and chemical properties such heat of adsorption may also be required. The model may require tuning to accurately predict the process dynamics. Model tuning parameters comprise LDF mass transfer coefficient *k,* and heat transfer coefficients *hᵢₙ, hₒᵤₜ* and *h_{jac}.* This is facilitated by the model tuning module 212 using historical data or domain knowledge.

**Table 1**

| **Balance** | **Governing equation** |
|---|---|
| Gas Phase Component Mass Balance | $\frac{\partial {c}_{i}}{\partial t} - \frac{\partial }{\partial z} \left[{cD}_{L}\frac{\partial {y}_{i}}{\partial z}-{c}_{i}v\right] + \frac{1 - ε}{ε} {ρ}_{s} \frac{\partial {q}_{i}}{\partial t} = 0$ |
| Gas Phase Total Mass Balance | $\begin{matrix}\frac{\partial P}{\partial t} - \frac{P}{{T}_{g}} \frac{\partial {T}_{g}}{\partial t} + {T}_{g} \frac{\partial }{\partial z} \left(\frac{P}{{T}_{g}}v\right) \\ + {RT}_{g} \frac{1 - ε}{ε} {ρ}_{s} {\sum }_{i = 1}^{{n}_{comp}} \frac{\partial {q}_{i}}{\partial t} = 0\end{matrix}$ |
| Solid Phase Component Mass Balance | $\frac{\partial {q}_{i}}{\partial t} - {k}_{i} \left({q}_{i}^{*}-{q}_{i}\right) = 0$ |
| Gas Phase Energy Balance | $\begin{matrix}\left[\frac{\partial \left({ρ}_{g}{C}_{pg}{T}_{g}\right)}{\partial t}+\frac{\partial \left({vρ}_{g}{C}_{pg}{T}_{g}\right)}{\partial z}\right] - {ε}_{c} \frac{\partial P}{\partial t} - {ε}_{c} v \left[{f}_{PD}+\frac{\partial P}{\partial z}\right] \\ + {h}_{f} {a}_{P} \left({T}_{g}-{T}_{s}\right) - {ε}_{c} {k}_{g} \frac{{\partial }^{2} {T}_{g}}{\partial {z}^{2}} \\ + {ε}_{c} \frac{2 {h}_{w}}{{r}_{in}} \left({T}_{g}-{T}_{w}\right)\end{matrix}$ |
| | $+ {\sum }_{i}^{{N}_{c}} \left[{θ}_{i}{C}_{pa , Tg}{ρ}_{bed}{T}_{g}\frac{{dq}_{i}}{dt}-\left(1-{θ}_{i}\right){C}_{pa , Ts}{ρ}_{bed}\left(\begin{matrix}{T}_{s} \\ - {T}_{g}\end{matrix}\right)\frac{{dq}_{i}}{dt}\right] = 0$ |
| Solid Phase Energy Balance | $\begin{matrix}\left(1-{ε}_{c}\right) \left[\begin{matrix}{ρ}_{s} {C}_{ps} \frac{{dT}_{s}}{dt} + {ρ}_{a} {C}_{pa , Ts} {\sum }_{i = 1}^{{n}_{comp}} {q}_{i} \frac{{dT}_{s}}{dt} \\ - {ρ}_{s} {\sum }_{i}^{{n}_{comp}} \left(-Δ{H}_{i}\right) \frac{{dq}_{i}}{dt}\end{matrix}\right] \\ - {h}_{f} {a}_{P} \left({T}_{g}-{T}_{s}\right) \\ - {\sum }_{i = 1}^{{n}_{comp}} \left[\begin{matrix}{θ}_{i} {C}_{pa , Tg , i} {ρ}_{bed} \left({T}_{g}-{T}_{s}\right) \frac{{dq}_{i}}{dt} \\ + \left(1-{θ}_{i}\right) {C}_{pa , Ts , i} {ρ}_{bed} \frac{{dq}_{i}}{dt}\end{matrix}\right] = 0\end{matrix}$ |
| Column Wall Energy Balance | $\begin{matrix}{ρ}_{w} {C}_{pw} \frac{\partial {T}_{w}}{\partial t} - {K}_{w} \frac{{\partial }^{2} {T}_{w}}{\partial {z}^{2}} - \frac{2 {r}_{in} {h}_{in}}{{r}_{out}^{2} - {r}_{in}^{2}} \left({T}_{g}-{T}_{w}\right) \\ + \frac{2 {r}_{out} {h}_{out}}{{r}_{out}^{2} - {r}_{in}^{2}} \left({T}_{w}-{T}_{jac}\right) = 0\end{matrix}$ |
| Jacket Energy Balance | $\begin{matrix}{ρ}_{jac} {C}_{p , jac} \frac{\partial {T}_{jac}}{\partial t} + {v}_{jac} {ρ}_{jac} {C}_{p , jac} \frac{\partial {T}_{jac}}{\partial z} \\ - \frac{2 {r}_{out} {h}_{out}}{{r}_{jac}^{2} - {r}_{out}^{2}} \left({T}_{w}-{T}_{jac}\right) \\ + \frac{2 {r}_{jac} {h}_{jac}}{{r}_{jac}^{2} - {r}_{out}^{2}} \left({T}_{jac}-{T}_{amb}\right) = 0\end{matrix}$ |
| Momentum Balance | $\frac{150}{{d}_{p}^{2}} {\left(\frac{1 - ε}{ε}\right)}^{2} {μ}_{g} v + \frac{1.75}{{d}_{p}} \left(\frac{1 - ε}{ε}\right) {ρ}_{g} {v}^{2} + \frac{\partial P}{\partial z} = 0$ |

Instead of the fixed feed inlet velocity boundary condition typically found in the literature, fixed feed mass flowrate boundary condition is specified at the column inlet. This formulation, coupled with Ergun equation, is used to determine the inlet feed pressure and velocity which is then used to apply the Danckwert boundary condition for other state variables such as feed composition and temperature at the column inlet. The fixed feed mass flowrate formulation and the Ergun equation are shown below: $\dot{m} = {ε}_{c} {ρ}_{g} Av$ $\frac{1.75}{{d}_{p}} \left(\frac{1 - ε}{ε}\right) {ρ}_{g} {v}^{2} + \frac{150}{{d}_{p}^{2}} {\left(\frac{1 - ε}{ε}\right)}^{2} {μ}_{g} v + \frac{\partial P}{\partial z} = 0$

In another embodiment, the prediction module 206 can be built using data-based modelling. Instead of employing CFD, neural networks such as Artificial Neural Network or Physics Inspired Neural Network are leveraged to capture the underlying physics of the process. A neural network is trained and tested for a specific process using vast amounts of historical data, either experimental or from reliable physics-based models, and domain knowledge. The network is trained on data comprising column dimensions, packed bed properties, operating conditions including pressure and cycle time, and feed conditions including temperature and composition as input, and predictions comprising gas pressure, gas velocity, and phase concentration and temperature as output. The neural network recognizes the pattern between the input-output data and adjusts its weights and biases to accurately capture these relations. This data is archived and can be extracted in real-time while making predictions during practical applications. In addition to this data, the training of neural network allows it to interpolate and make predictions for the missing data, adding to the robustness of prediction module 206.

In accordance with the present disclosure, the post-processing module 208 is configured to process the output data from the prediction module 206 to determine various process characteristics such as energy and mass imbalance, the amount of energy and mass entering and exiting the packed bed column and the distribution thereof, process energy requirements, and process KPIs specific to each process. These process characteristics help in assessing the performance of the process for the given operating conditions. The KPIs for a gas separation process include an energy consumption, a purity, a recovery and a productivity, while those for thermal energy storage could be the energy required for gas circulation and productivity.

For example, FIG. 2B shows an exemplary packed bed column with a predefined length L, in accordance with some embodiments of the present disclosure. As shown in FIG. 2B, the packed bed column of length L is considered for determining the energy and mass balance for the process by the post-processing module 208 using the following formulations: $Mass Imbalance \left[%\right] = \frac{\left|{mole}_{in}-{mole}_{out}-{mole}_{acc}\right|}{{mole}_{in}} ∗ 100$ wherein, ${mole}_{in} = \frac{{ε}_{c} A}{R} {\int }_{0}^{{t}_{final}} \left[\frac{{v}_{z = 0} \left(t\right) {P}_{z = 0} \left(t\right)}{{T}_{g , z = 0} \left(t\right)}\right] dt$ ${mole}_{out} = \frac{{ε}_{c} A}{R} {\int }_{0}^{{t}_{final}} \left[\frac{{v}_{z = L} \left(t\right) {P}_{z = L} \left(t\right)}{{T}_{g , z = L} \left(t\right)}\right] dt$ $\begin{matrix}{mole}_{acc , {CO}_{2}} = {\sum }_{i = 1}^{{n}_{comp}} {\int }_{0}^{L} \left[\frac{{ε}_{c} A}{R}{\left.\frac{P \left(z\right) {y}_{i} \left(z\right)}{{T}_{g} \left(z\right)}\right|}_{final}+\left(1-{ε}_{c}\right){Aq}_{i , final}\left(z\right)dz\right] \\ - {\int }_{0}^{L} \left[\frac{{ε}_{c} A}{R}{\left.\frac{P \left(z\right) {y}_{i} \left(z\right)}{{T}_{g} \left(z\right)}\right|}_{initial}+\left(1-{ε}_{c}\right){Aq}_{i , initial}\left(z\right)dz\right]\end{matrix}$ $Heat Imbalance \left[%\right] = \frac{\left|{heat}_{in}+{heat}_{gen}-\left({heat}_{out}+{heat}_{acc}\right)\right|}{{heat}_{out} + {heat}_{acc}} ∗ 100$ wherein, ${heat}_{in} = {heat}_{in , gas} + {heat}_{in , jac}$ ${heat}_{out} = {heat}_{out , gas} + {heat}_{out , jac}$ 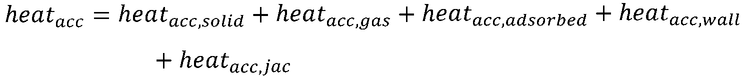 heatacc = heatacc,solid + heatacc,gas + heatacc,adsorbed + heatacc,wall + heatacc,jac

For an adiabatic column with no heating or cooling via the outer jacket, the energy imbalance is given by: $\begin{matrix}Energy Imbalance \left[%\right] \\ = \frac{\left|{heat}_{in , gas}+{heat}_{gen}-\left({heat}_{out , gas}+{heat}_{acc , solid}+{heat}_{acc , gas}+{heat}_{acc , adsorbed}\right)\right|}{{heat}_{out , gas} + {heat}_{acc , solid} + {heat}_{acc , gas} + {heat}_{acc , adsorbed}} \\ ∗ 100\end{matrix}$ ${heat}_{in , gas} = {ε}_{c} A {\int }_{0}^{{t}_{final}} \left[{C}_{p , g = 0}\left(t\right){v}_{z = 0}\left(t\right){T}_{g , z = 0}\left(τ\right){ρ}_{g , z = 0}\left(t\right)\right] dt$ ${heat}_{out , gas} = {ε}_{c} A {\int }_{0}^{{t}_{final}} \left[{C}_{pg , z = L}\left(t\right){\overline{v}}_{z = L}\left(t\right){T}_{g , z = L}\left(t\right){ρ}_{g , z = L}\left(t\right)\right] dt$ ${heat}_{in , jac} = {ε}_{c} {A}_{fluid} {\int }_{0}^{{t}_{final}} \left[{C}_{p , jac , z = 0}\left(t\right){v}_{jac , z = 0}\left(t\right){T}_{jac , z = 0}\left(t\right){ρ}_{jac , z = 0}\left(t\right)\right] dt$ ${heat}_{out , jac} = {ε}_{c} {A}_{fluid} {\int }_{0}^{{t}_{final}} \left[{C}_{p , jac , z = L}\left(t\right){v}_{jac , z = L}\left(t\right){T}_{jac , z = L}\left(t\right){ρ}_{jac , z = L}\left(t\right)\right] dt$ ${heat}_{gen} = \left(1-{ε}_{c}\right) {Aρ}_{P} {\int }_{0}^{L} \left[{\sum }_{i = 1}^{{n}_{comp}} - Δ {H}_{i} \left({q}_{i , final}\left(z\right)-{q}_{i , initial}\left(z\right)\right)\right] dz$ ${heat}_{acc , solid} = \left(1-{ε}_{c}\right) {AC}_{p , s} {ρ}_{P} {\int }_{0}^{L} \left[{T}_{s , final}\left(z\right)-{T}_{s , initial}\left(z\right)\right] dz$ ${heat}_{gen} = \left(1-{ε}_{c}\right) {Aρ}_{P} {\int }_{0}^{L} \left[{\sum }_{i = 1}^{{n}_{comp}} - Δ {H}_{i} \left({q}_{i , final}\left(z\right)-{q}_{i , initial}\left(z\right)\right)\right] dz ;$ ${heat}_{acc , solid} = \left(1-{ε}_{c}\right) {AC}_{p , s} {ρ}_{P} {\int }_{0}^{L} \left[{T}_{s , final}\left(z\right)-{T}_{s , initial}\left(z\right)\right] dz$ ${heat}_{acc , gas} = {ε}_{c} A {\int }_{0}^{L} \left[{T}_{g}{\left.\left(z\right){C}_{p , g}\left(z\right){ρ}_{g}\left(z\right)\right|}_{final}-{T}_{g}{\left.\left(z\right){C}_{p , g}\left(z\right){ρ}_{g}\left(z\right)\right|}_{initial}\right] dz$ $\begin{matrix}{heat}_{acc , adsorbed} = \\ \left(1-{ε}_{c}\right) A {\int }_{0}^{L} \left[{\sum }_{i = 1}^{{n}_{comp}} \left\{{T}_{g}\left(z\right){\left.{C}_{p , a}\left(z\right){q}_{i}\left(z\right)\right|}_{final}-{T}_{g}\left(z\right){C}_{p , q}{\left.\left(z\right){q}_{i}\left(z\right)\right|}_{initial}\right\}\right] dz\end{matrix}$ ${heat}_{acc , wall} = π \left({r}_{o}^{2}-{r}_{i}^{2}\right) {C}_{pw} {ρ}_{w} {\int }_{0}^{L} {T}_{wall , final} \left(z\right) - {T}_{wall , initial} \left(z\right) dz$ ${heat}_{acc , jac} = π \left({r}_{jac}^{2}-{r}_{o}^{2}\right) {C}_{p , jac} {ρ}_{jac} {\int }_{0}^{L} {T}_{jac , final} \left(z\right) - {T}_{jac , initial} \left(z\right) dz$

Energy consumed by blowers for feeding the gas via the feed end and vacuum pumps for evacuating the column via the product end during packed bed operations is determined using the following formulations: $\begin{matrix}{E}_{blower} \left[J\right] = \frac{1}{η} {ε}_{c} {πr}_{in}^{2} \frac{γ}{γ - 1} {\int }_{t = 0}^{t = {t}_{blow}} {v}_{z = 0} \left(t\right) {P}_{z = 0} \left(t\right) \left[{\left(\frac{{P}_{z = 0} \left(t\right)}{{P}_{atm}}\right)}^{\frac{γ - 1}{γ}}-1\right] dt \\ {E}_{vacuum} \left[J\right] = \frac{1}{η} {ε}_{c} {πr}_{in}^{2} \frac{γ}{γ - 1} {\int }_{t = 0}^{t = {t}_{vacuum}} {v}_{z = L} \left(t\right) {P}_{z = L} \left(t\right) \left[{\left(\frac{{P}_{atm}}{{P}_{z = L} \left(t\right)}\right)}^{\frac{γ - 1}{γ}}-1\right] dt\end{matrix}$

For a gas separation process, in addition to the electrical energy consumption, the KPIs include parameters such as recovery, purity, and specific energy consumption. $Recovery \left[%\right] = \frac{{\left.{mole}_{out , target}\right|}_{regen}}{{mole}_{in}} ∗ 100$ $Purity \left[%\right] = \frac{{\left.{mole}_{out , target}\right|}_{regen}}{{\left.{mole}_{out , total}\right|}_{regen}} ∗ 100$ $Specific Electrical Energy \left[\frac{J}{kg}\right] = \frac{\sum {E}_{step}}{{\left.{mole}_{out , target}\right|}_{regen} ∗ {M}_{target}}$ Where target gas, also called the heavy gas, is the component of gas that is selectively adsorbed by the packed bed column, and released in the regeneration steps, involving heating or evacuation or a combination thereof. The regeneration steps aid in the desorption of the target gas component from the packed bed.

The available measurements shall allow the model tuning module 212 to adjust the afore-mentioned model parameters so that they capture the current state of the system better. For example, as the adsorption bed goes through several cycles of adsorption-desorption, the isotherm model that captured the original material may not best capture the capacity or dynamics of the used adsorbent material.

In accordance with the present disclosure, the optimization module 210 is configured to interact with the prediction module 206 and the post-processing module 208 to determine the optimized set of parameters as per the user specifications, generally for improving the process KPIs. The set of parameters may include feed properties such as temperature, pressure, flowrate, regeneration temperature, evacuation pressure, and real-time recommendation of step-time. The real-time step time recommendations allow for continual optimization of the packed bed process, allowing the operators to initiate/terminate the current step in the ongoing process cycle. The optimization action is triggered when the predicted value of the process KPIs deviate from the user-specified KPIs for the given period.

The optimization module 210 can also be a first principle-based model, a data driven model, or a combination thereof. The optimization task is not restricted to a single objective, and hence the optimization module 210 may utilize various techniques comprising pareto fronts for multi-objective optimization. The data generated from the prediction module 206, the post-processing module 208, and the optimization module 210 is accessed through a display and control device (not shown in FIG. 1 and FIG. 2A) available to the user. The optimization module 210 can also conduct sensitivity analysis for the different operating parameters and recommends the best course of action for optimizing the process. The data captured by the one or more sensors and predictions are displayed on the display and control device (not shown in FIG. 1 and FIG. 2A).

For example, FIGS. 3A and 3B illustrate exemplary flow diagrams of a processor-implemented method 300 for real-time monitoring and optimization of a packed bed column, using the system 100 of FIG. 1, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 104 of the system 100 are configured to collect an input data of a packed bed column at an initial state with a predefined configuration through the I/O interface(s) 106. The input data of the packed bed column includes one or more of (i) an inlet temperature of a feed gas, (ii) an inlet pressure of the feed gas, (iii) one or more properties of each of one or more components of the feed gas, and (iv) an outlet pressure of a gas at an exit of the packed bed column.

In an embodiment, the initial state defines the state of the packed bed column before its monitoring, optimization and fine-tuning. In an embodiment, the predefined configuration is a configuration of packed bed column defined by a user. In an embodiment, the one or more properties of each of one or more components of the feed gas include but are not limited to partial pressure, molecular weight, and a specific heat capacity.

The predefined configuration includes one or more of (i) one or more adsorbent properties, (ii) one or more gas properties, and (iii) one or more column dimensions and one or more column properties. Further, the one or more gas properties include (i) a gas temperature, (ii) a gas composition, and (iii) a gas pressure inside the packed bed column at the initial state. In an embodiment, the one or more adsorbent properties include a density, the specific heat capacity, a particle size, and isotherms of gas components of interest. The isotherms capture the equilibrium capacity as a function of state variables such as the gas temperature and the gas component partial pressure inside the packed bed column and are used to model the rate of adsorption/desorption. In an embodiment, the one or more column dimensions include a column length and a column diameter. In an embodiment, the one or more column properties include a column void, a column density, a specific heat capacity, and a heat conductivity.

In accordance with the present disclosure, one or more input data retrieval techniques are employed to retrieve the input data of the packed bed column through multiple sources at various frequencies, using the I/O interface(s) 106. The multiple sources may include a distributed control system, historian, laboratory information management system, and manufacturing execution system. The one or more input data retrieval techniques are the data retrieval techniques such as structed query language (SQL), data acquisition techniques, data sensing techniques, internet-of-things (IOT) sensing techniques, and so on.

At step 304 of the method 300, the one or more hardware processors 104 of the system 100 are configured to pre-process the input data of the packed bed column received at step 302 of the method 300 to obtain a pre-processed input data of the packed bed column. One or more data processing techniques are performed on the input data to obtain the pre-processed input data of the packed bed column. In an embodiment, the one or more data processing techniques perform one or more of: data cleaning, filling missing data, outlier removal, data augmentation, data standardization, and so on.

The pre-processed input data is the pre-processed version of the input data, and includes one or more of (i) a pre-processed inlet temperature of the feed gas, (ii) a pre-processed inlet pressure of the feed gas, (iii) one or more pre-processed properties of each of one or more components of the feed gas, and (iv) a pre-processed outlet pressure of the gas at the exit of the packed bed column.

At step 306 of the method 300, the one or more hardware processors 104 of the system 100 are configured to predict one or more state parameters inside the packed bed column, based on the pre-processed input data obtained at step 304 of the method 300. The one or more state parameters include an adsorbent temperature, one or more adsorbate concentrations on the adsorbent, the gas temperature, the gas composition, the gas pressure, a gas velocity, a wall temperature of the packed bed column, and the temperature of a jacket enclosing the packed bed column.

The one or more state parameters are predicted in the spatio-temporal domain inside the packed bed column. In the present disclosure, the spatio-temporal domain means at different locations inside the packed bed column and at different time-instances or at different predefined time intervals. The mass flowrate formulation is not required when the inlet feed pressure is known, in which case physics-based models such as the Ergun equation can be directly invoked to determine the feed inlet velocity. Nevertheless, the formulation can still be employed to reconcile the predictions and/or detect anomalies inside the packed bed. However, when the inlet feed pressure is unknown, the feed inlet velocity cannot be determined using such physics-based models.

Hence, the mass flowrate formulation can be performed either physics-based or data-driven model according to the present disclosure to determine the feed inlet velocity when the inlet feed pressure is unknown. In one embodiment, a neural network is used to determine the mass flowrate of the feed to the packed bed. The neural network is trained on vast amounts of data including inlet feed mass flowrate and feed properties comprising temperature and concentration as the input and inlet feed velocity and pressure as output. The trained neural network is then employed to predict the inlet feed velocity and pressure, thus facilitating real-time accurate predictions during the monitoring of the packed bed column. This formulation accurately captures the functioning of the mass flow meter, and hence predicts the reality more precisely. This accurate prediction facilitates real-time process correction for optimization, as the feed conditions such as flow rate, feed temperature and composition vary with time.

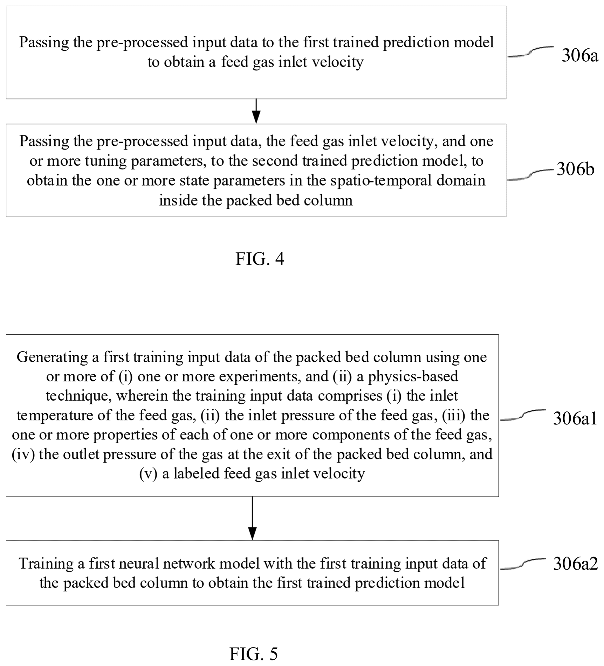

A first trained prediction model and a second trained prediction model are employed to predict the one or more state parameters inside the packed bed column. FIG. 4 is a flow diagram showing steps for predicting the one or more state parameters in the spatio-temporal domain inside the packed bed column, in accordance with some embodiments of the present disclosure. As shown in FIG. 4, predicting the one or more state parameters in the spatio-temporal domain inside the packed bed column is explained through steps 306a and 306b.

At step 306a, the pre-processed input data obtained at step 304 of the method 300, is passed as in input to the first trained prediction model which predicts a feed gas inlet velocity as a corresponding output. The first trained prediction model is obtained by training a neural network model with suitable training data. FIG. 5 is a flow diagram showing steps for obtaining a first trained prediction model, in accordance with some embodiments of the present disclosure. As shown in FIG. 5, obtaining the first trained prediction model is explained through sub-steps 306a1 and 306a2.

At sub-step 306a1, a first training input data of the packed bed column is generated using one or more of (i) one or more experiments, and (ii) a physics-based technique. The first training input data is the training data which includes a plurality of training samples. Each of the plurality of training samples includes: (i) the inlet temperature of the feed gas, (ii) the inlet pressure of the feed gas, (iii) the one or more properties of each of one or more components of the feed gas, (iv) the outlet pressure of the gas at the exit of the packed bed column, and (v) a corresponding labeled feed gas inlet velocity for the parameters listed from (i) to (iv).

At sub-step 306a2, a first neural network model is trained with the first training input data of the packed bed column obtained at sub-step 306a1, to obtain the first trained prediction model. The first neural network model is a neural network model such as PINN and ANN.

At step 306b, (i) the pre-processed input data obtained at step 304 of the method 300, (ii) the corresponding feed gas inlet velocity predicted by the first trained prediction model at step 306a, and (iii) one or more tuning parameters, are passed to the second trained prediction model, to obtain the one or more state parameters in the spatio-temporal domain inside the packed bed column.

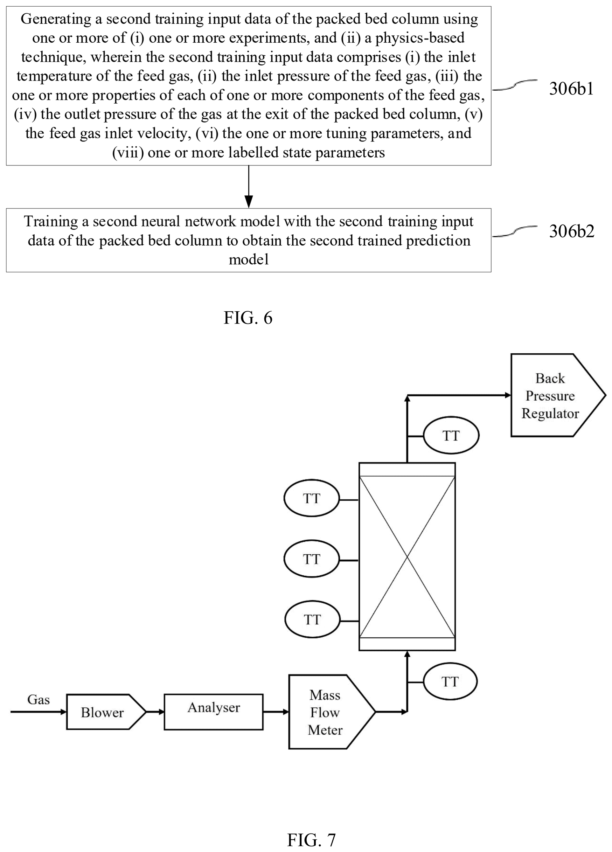

The second trained prediction model is obtained by training the neural network model with suitable training data like the first trained prediction model. FIG. 6 is a flow diagram showing steps for obtaining a second trained prediction model, in accordance with some embodiments of the present disclosure. As shown in FIG. 6, obtaining the second trained prediction model is explained through sub-steps 306b1 and 306b2.

At step 306b1, a second training input data of the packed bed column is generated using the one or more of (i) the one or more experiments, and (ii) the physics-based technique. The second training input data is the training data which includes a plurality of training samples. Each of the plurality of training samples includes (i) the inlet temperature of the feed gas, (ii) the inlet pressure of the feed gas, (iii) the one or more properties of each of one or more components of the feed gas, (iv) the outlet pressure of the gas at the exit of the packed bed column, (v) the feed gas inlet velocity, (vi) the one or more tuning parameters, and (viii) one or more corresponding labelled state parameters for the parameters listed from (i) to (vi).

At sub-step 306b2, a second neural network model is trained with the second training input data of the packed bed column obtained at sub-step 306b1, to obtain the second trained prediction model. The second neural network model is a neural network model such as PINN and ANN.

At step 308 of the method 300, the one or more hardware processors 104 of the system 100 are configured to post-process the one or more state parameters obtained at step 306 of the method 300, to determine one or more KPIs of a process and each of one or more process steps of the process associated with the packed bed column.

In this context, the process is the industrial process or the operation which is to be performed by the packed bed column. For example, the process may be one present in the list which includes but is not limited to: absorption, adsorption, conducting reactions between phases, and thermal energy storage. The one or more process steps include one or more of adsorption, heating, evacuation, depressurization, pressurization, cooling, rinsing, and purging that are performed within the given process cycle. The one or more KPIs include but are not limited to (i) the energy consumption, (ii) a recovery, and (iii) a purity.

At step 310 of the method 300, the one or more hardware processors 104 of the system 100 are configured to optimize the one or more KPIs of the process and each of the one or more process steps of the process obtained at step 308 of the method 300. This is achieved by varying the corresponding one or more process parameters of the process. The one or more process parameters include a process step-time, a regeneration temperature, a feed gas inlet temperature, a feed gas inlet pressure, and an evacuation pressure.

At step 312 of the method 300, the one or more hardware processors 104 of the system 100 are configured to monitor the packed bed column in real-time, based on a current state of the packed bed column, and the one or more process parameters of the process. The current state of the packed bed column includes, but is not limited to, the exit gas pressure, the exit gas temperature, and the temperature of the gas present inside the column, at multiple desired locations. Information regarding the current state of the bed is acquired using the input data collection module 202. This input data facilitates processing of the prediction module 206 and the model tuning module 212.

The system 100 at step 310 becomes the monitoring system (comprising the pre-processing module 204, the prediction module 206, the post-processing module 208, and the optimization module 210) that computationally replicates the physical packed bed process. In other words, the monitoring system is referred to as a virtual system or a digital twin of the physical packed bed column. The monitoring system at this step can be used to assess and fine-tune the process performance of the packed bed column, by processing the real-time data of the process state variables such as temperature and concentration.

For multi-step process with frequently changing conditions such as those during mobile carbon capture, the process optimum keeps shifting with time due to different conditions prevailing in the multiple beds. Hence, a change in the conditions in one bed in the process may require change in the operating conditions including step time and mass flowrate to another bed to operate in the global optimum range. For such operations, the monitoring system processes data from the multiple bed columns to change the controllable operating parameters to reach a global optimum for the complete process. Given the packed bed column condition, the monitoring system can also determine the time for evacuating the column during a multi-step gas separation via adsorption process involving packed bed column regeneration using vacuum swing. This prediction minimizes the vacuum pump idle time, thus reducing the cycle time and energy requirement of the process.

The monitoring system also facilitates simulating various scenarios to help the user design with different packed bed processes including gas separation via adsorption and thermal energy storage applications. The user may specify the process initial and operating conditions, and column design parameters through a user-specification module (not shown in FIG. 2A). The monitoring system acts as a soft sensor that can capture values of state variables such as phase concentration that are difficult to measure in real-world applications, predicting the dynamic evolution of the packed bed for the given period. This data from the monitoring system provides valuable process insights, including the length of the heat and mass transfer zones, and the length of the unutilized bed.

Furthermore, the monitoring system reduces the operating and capital cost of the process, requiring only a limited number of strategically placed sensors for optimal operation, given the multiple information sources are sufficient to relay adequate data for the monitoring system to operate while ensuring that safety measures for the process are maintained. Moreover, the user may also utilize the monitoring system to find optimum set of parameters for a specific packed bed process, determine the capacity of various process equipment including blower and vacuum pump, or assess the performance of any sorbent material for a given operation. Hence, the monitoring system allows the user to design an efficient packed bed process. The simulation specifications and results are stored in the database for future reference. Further, the monitoring system facilitates real-time process monitoring and optimization for any packed bed process, thus increasing the process efficiency and plant life while reducing the process capital and operating cost.

At step 314 of the method 300, the one or more hardware processors 104 of the system 100 are configured to fine-tune one or more tuning parameters of the packed bed column during the monitoring, when a deviation at the current state is observed compared to the initial state. The one or more tuning parameters include a heat transfer coefficient, a mass transfer coefficient, and the predefined configuration.

The data from the multiple sources obtained in real-time can be compared with the predicted data from the monitoring system to detect anomalies including gas build-up, unusual temperature rise, and gas flow inside the packed bed. Additionally, due to the cyclic nature of many industrial processes, the real-time data associated with each step of the process can also be compared with the historical data of the same step (of the same column or another peer) in order to detect anomalies and make course-corrections. Moreover, long term prediction about the bed conditions using the prediction unit of the monitoring system facilitates preventive maintenance scheduling for the process, thus saving time, effort and cost involved with unscheduled process shutdowns.

The methods and systems of the present disclosure build the monitoring system that computationally replicates the physical packed bed process. The monitoring system processes the real-time data of process state variables such as temperature and concentration to assess and optimize the process performance. It facilitates real-time process monitoring and optimization for any packed bed process, thus increasing the process efficiency and plant life while reducing the process capital and operating cost.

### Example Scenario:

To comprehend the application of the monitoring system, consider an exemplary packed bed column processing flue gas to separate *CO*₂from a binary mixture. The temperature sensor and *CO*₂ analyzer at the bed inlet measure the feed temperature and *CO*₂ concentration, and a mass flow meter measures the mass flowrate of the inlet flue gas. The temperature sensors placed along the length of the column measure the temperature of the gas inside the column. A back pressure regulator is used to maintain a constant pressure at the column exit. Initially, the packed bed column in the first step of the cyclic process is filled with ambient air at 25°*C*, while all the packed bed columns in the process are filled with fresh adsorbent material that selectively adsorbs *CO*₂ from the flue gas. The packed bed operates in coordination with the monitoring and optimization system, which not only displays real-time data acquired through multiples sources but also offers recommendations to optimize the process KPIs before the final product is obtained. Since a pressure sensor is not available in the exemplary packed bed column, the mass flowrate formulation coupled with the Ergun equation is invoked to determine the inlet feed pressure and the inlet feed velocity.

FIG. 7 shows an exemplary setup for real-time monitoring and optimization of a packed bed column, in accordance with some embodiments of the present disclosure. As shown in FIG. 7, consider for instance, estimated breakthrough time of t seconds for a packed bed set-up based on the adsorbent and inlet feed properties. Breakthrough time is defined as the time required for the concentration of the target gas component at the exit of the adsorption column to reach 5% of its concentration at the inlet. The breakthrough time marks the time at which the adsorbent begins to lose its effectiveness as it becomes saturated and can no longer adsorb most of the target gas fed into the column.

Hence, the adsorption step time is kept at t seconds. As mentioned before, the feed properties can vary with time, especially for cases involving carbon capture from mobile sources. As the concentration or flow rate of *CO₂* in the feed gas increases, the breakthrough time decreases, and vice versa. If not accounted for, a shorter breakthrough time would lead to reduced process recovery, while a longer breakthrough time would result in underutilization of the adsorption bed, both of which are undesirable. When the process is monitored via the proposed monitoring system, these changes would be captured in real-time, and the prediction and optimization unit would operate in conjunction to recommend appropriate change in step time *t*.

In addition to providing such a recommendation, the proposed monitoring system would estimate the state variables such as solid phase concentration and temperature, gas phase concentration and temperature, and the gas pressure and velocity in the column. These estimates provide crucial insights into the process and are an indicator of process performance. Since there is a sharp temperature rise as the adsorption front progresses along the column, the acquired data and the predictions, especially the temperature profiles, can be further compared to detect process anomalies and take corrective actions. As an example, if the actual breakthrough time that is evident from a sharp rise in the product gas temperature at the column exit does not tally with the predicted breakthrough time, it could imply that the bed has deteriorated and hence needs to be replenished or that the gas flow inside the bed is ineffective due to channeling.

Additionally, instances of fouling caused by particle aggregation, disintegration or channeling can be detected by comparing the predicted and acquired data. This anomaly can also be detected by comparing the pressure drops for the same feed flow predicted by the proposed monitoring system for the various beds operating in cyclic manner in operations such as pressure/vacuum swing adsorption (VSA/PSA), temperature swing adsorption (TSA), concentration swing adsorption (CSA) or a combination thereof such as vacuum-temperature swing adsorption (VTSA). Similarly, the bed evacuation flowrate profile can further indicate changes in bed capacity as a more saturated bed is easier to evacuate.

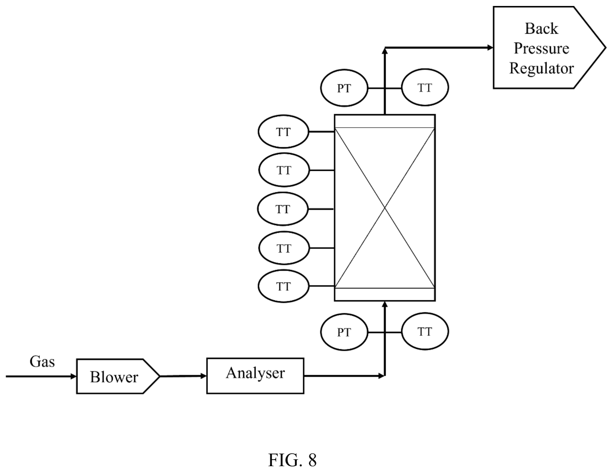

FIG. 8 shows an exemplary setup for real-time monitoring and optimization of a packed bed column with *CO*₂ concentration analyzer, and pressure and temperature sensors at the column inlet and outlet in addition to temperature sensors along the length of the column, in accordance with some embodiments of the present disclosure. Since the pressure at the inlet is known, the Ergun equation can be directly invoked to determine the feed inlet velocity. As the gas mass flowrate is critical parameter for gas separation and thermal energy storage operations, the monitoring system of the present disclosure can be used to compute the mass flowrate of the feed gas using the pressure sensor at the column inlet and outlet. This approach eliminates the need for the flowrate sensor. Moreover, the change in pressure due to migration of components can be used to determine the location of the mass transfer zone inside the packed bed column for a constant feed mass flowrate. Additionally, the gas mass flowrate can also be measured from the pressure drop across multiple other equipment, such as heat exchanger, involved in the cycle.

Additionally, the temperature sensors can be used to monitor the formation and progression of the heat transfer zone within the column. In operations involving mass transfer between phases, these measurements can be further calibrated to determine the characteristics of the mass transfer zone. Since heat and mass transfer are analogous, the system can be trained on temperature data, in addition to column dimensions and adsorbent properties to predict the change in gas phase concentration. Since tracking mass transfer inside a column is difficult, the proposed monitoring system offers valuable insights into process kinetics by providing the operator with real-time information on the formation and progression of the mass transfer zone. This calibration provides accurate values even if the concentration of the feed gas changes. Furthermore, the change in gas concentration, as indicated by the mass transfer zone, can be utilized to predict changes in solid-phase concentration which is another parameter that cannot be easily measured in practical applications.

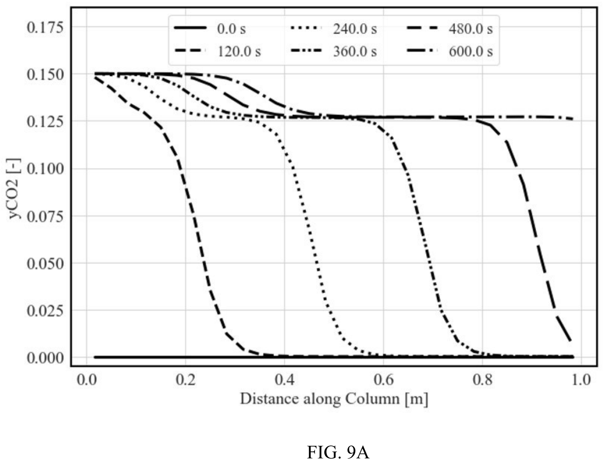

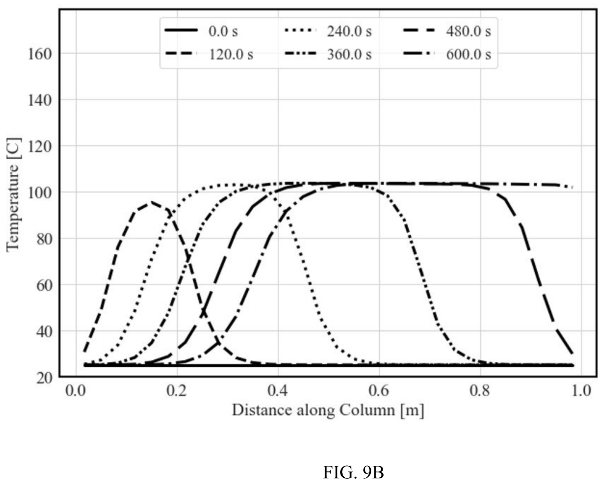

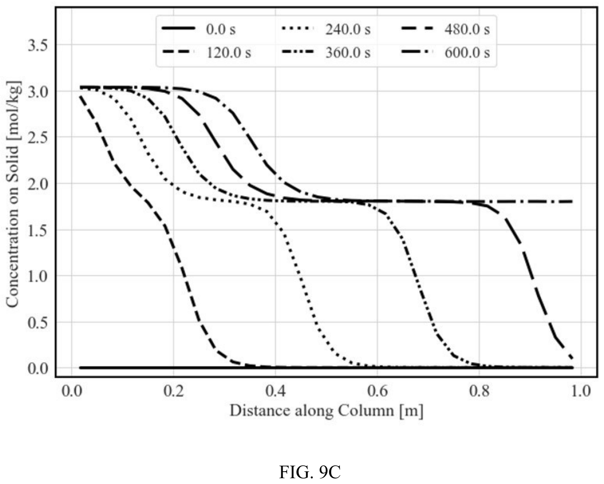

FIGS. 9A-9C are graphs showing typical gas concentration, gas temperature, and solid concentration profiles, respectively, in accordance with some embodiments of the present disclosure. In this gas separation operation, potassium carbonate adsorbent supported on alumina (*Al₂O₃* - *γAl*₂*O*₃) is used to separate of *CO₂* from a flue gas mixture fed at 25°C containing 85% nitrogen and balance of *CO*₂*.* The adiabatic column is initially saturated with pure nitrogen at 25°*C*. As depicted in FIG. 9A, the breakthrough occurs at around 480s as the outlet mole fraction of *CO*₂ starts increasing at the column outlet. In case the user specifies a higher step time, the monitoring system will recommend the user to stop the process before the specified step time to prevent recovery loss from the process. The gas temperature profiles shown in FIG. 9B depict an initial increase in gas temperature which is attributed to the heat of adsorption released during the process. The temperature falls because of the continuous 25°*C* feed to the column, resulting in higher solid concentration which is evident from FIG. 9C between 0 m and 0.4 m of the packed bed length.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of real-time monitoring and optimization of a packed bed column. The monitoring system of the present disclosure facilitates simulating various scenarios to help the user design different packed bed processes including gas separation via adsorption and thermal energy storage applications. The user may specify the process initial and operating conditions, and column design parameters. The monitoring system acts as a soft sensor that can capture values of state variables that are difficult to capture in real-world applications, predicting the dynamic conditions of the packed bed for the given period. This data from the monitoring system provides valuable process insights, including the length of the heat and mass transfer zones, and the length of the unutilized bed.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300), comprising:
collecting, via one or more input/output (I/O) interfaces, an input data of a packed bed column at an initial state with a predefined configuration, using one or more input data retrieval techniques, wherein the input data of the packed bed column comprises one or more of (i) an inlet temperature of a feed gas, (ii) an inlet pressure of the feed gas, (iii) one or more properties of each of one or more components of the feed gas, and (iv) an outlet pressure of a gas at an exit of the packed bed column, wherein the predefined configuration includes one or more of (i) one or more adsorbent properties, (ii) one or more gas properties, and (iii) one or more column dimensions and one or more column properties, and wherein the one or more gas properties comprise (i) a gas temperature, (ii) a gas composition, and (iii) a gas pressure (302);
pre-processing, via one or more hardware processors, the input data of the packed bed column using one or more data processing techniques to obtain a pre-processed input data of the packed bed column, wherein the pre-processed input data comprises one or more of (i) a pre-processed inlet temperature of the feed gas, (ii) a pre-processed inlet pressure of the feed gas, (iii) one or more pre-processed properties of each of one or more components of the feed gas, and (iv) a pre-processed outlet pressure of the gas at the exit of the packed bed column (304);
predicting, via the one or more hardware processors, one or more state parameters in a spatio-temporal domain inside the packed bed column using a first trained prediction model and a second trained prediction model, based on the pre-processed input data, wherein the one or more state parameters comprise an adsorbent temperature, one or more adsorbate concentrations on the adsorbent, the gas temperature, the gas composition, the gas pressure, a gas velocity, a wall temperature of the packed bed column, and the temperature of a jacket enclosing the packed bed column (306);
post-processing, via the one or more hardware processors, the one or more state parameters to determine one or more key performing indicators (KPIs) of a process and each of one or more process steps of the process associated with the packed bed column, wherein the one or more KPIs are (i) an energy consumption, (ii) a recovery, and (iii)a purity (308); and
optimizing, via the one or more hardware processors, the one or more KPIs of the process and each of the one or more process steps of the process by varying one or more process parameters of the process, wherein the one or more process parameters comprises a process step-time, a regeneration temperature, a feed gas inlet temperature, a feed gas inlet pressure, and an evacuation pressure (310).

2. The processor-implemented method (300) as claimed in claim 1, further comprising:
monitoring in real-time periodically, via the one or more hardware processors, the packed bed column, based on a current state and the one or more process parameters of the process (312); and
fine-tuning, via the one or more hardware processors, one or more tuning parameters of the packed bed column, when a deviation is observed during the monitoring, wherein the one or more tuning parameters comprises a heat transfer coefficient, a mass transfer coefficient, and the predefined configuration (314).

3. The processor-implemented method (300) as claimed in claim 1, wherein predicting the one or more state parameters in the spatio-temporal domain inside the packed bed column, comprising:
passing the pre-processed input data to the first trained prediction model to obtain a feed gas inlet velocity (306a); and
passing the pre-processed input data, the feed gas inlet velocity, and one or more tuning parameters, to the second trained prediction model, to obtain the one or more state parameters in the spatio-temporal domain inside the packed bed column (306b).

4. The processor-implemented method (300) as claimed in claim 1, wherein the first trained prediction model is obtained by:
generating a first training input data of the packed bed column using one or more of (i) one or more experiments, and (ii) a physics-based technique, wherein the training input data comprises (i) the inlet temperature of the feed gas, (ii) the inlet pressure of the feed gas, (iii) the one or more properties of each of one or more components of the feed gas, (iv) the outlet pressure of the gas at the exit of the packed bed column, and (v) a labeled feed gas inlet velocity (306a1); and
training a first neural network model with the first training input data of the packed bed column to obtain the first trained prediction model (306a2).

5. The processor-implemented method (300) as claimed in claim 1, wherein the second trained prediction model is obtained by:
generating a second training input data of the packed bed column using one or more of (i) one or more experiments, and (ii) a physics-based technique, wherein the second training input data comprises (i) the inlet temperature of the feed gas, (ii) the inlet pressure of the feed gas, (iii) the one or more properties of each of one or more components of the feed gas, (iv) the outlet pressure of the gas at the exit of the packed bed column, (v) the feed gas inlet velocity, (vi) the one or more tuning parameters, and (viii) one or more labelled state parameters (306b1); and
training a second neural network model with the second training input data of the packed bed column to obtain the second trained prediction model (306b2).

6. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
collect, via the one or more input/output (I/O) interfaces (106), an input data of a packed bed column at an initial state with a predefined configuration, using one or more input data retrieval techniques, wherein the input data of the packed bed column comprises one or more of (i) an inlet temperature of a feed gas, (ii) an inlet pressure of the feed gas, (iii) one or more properties of each of one or more components of the feed gas, and (iv) an outlet pressure of a gas at an exit of the packed bed column, wherein the predefined configuration includes one or more of (i) one or more adsorbent properties, (ii) one or more gas properties, and (iii) one or more column dimensions and one or more column properties, and wherein the one or more gas properties comprise (i) a gas temperature, (ii) a gas composition, and (iii) a gas pressure;
pre-process the input data of the packed bed column using one or more data processing techniques to obtain a pre-processed input data of the packed bed column, wherein the pre-processed input data comprises one or more of (i) a pre-processed inlet temperature of the feed gas, (ii) a pre-processed inlet pressure of the feed gas, (iii) one or more pre-processed properties of each of one or more components of the feed gas, and (iv) a pre-processed outlet pressure of the gas at the exit of the packed bed column;
predict one or more state parameters in a spatio-temporal domain inside the packed bed column using a first trained prediction model and a second trained prediction model, based on the pre-processed input data, wherein the one or more state parameters comprise an adsorbent temperature, one or more adsorbate concentrations on the adsorbent, the gas temperature, the gas composition, the gas pressure, a gas velocity, a wall temperature of the packed bed column, and the temperature of a jacket enclosing the packed bed column;
post-process the one or more state parameters to determine one or more key performing indicators (KPIs) of a process and each of one or more process steps of the process associated with the packed bed column, wherein the one or more KPIs are (i) an energy consumption, (ii) a recovery, and (iii) a purity; and
optimize the one or more KPIs of the process and each of the one or more process steps of the process by varying one or more process parameters of the process, wherein the one or more process parameters comprises a process step-time, a regeneration temperature, a feed gas inlet temperature, a feed gas inlet pressure, and an evacuation pressure.

7. The system (100) as claimed in claim 6, wherein the one or more hardware processors (104) are further configured by the instructions to:
monitor in real-time periodically the packed bed column, based on a current state and the one or more process parameters of the process; and
fine-tune one or more tuning parameters of the packed bed column, when a deviation is observed during the monitoring, wherein the one or more tuning parameters comprises a heat transfer coefficient, a mass transfer coefficient, and the predefined configuration.

8. The system (100) as claimed in claim 6, wherein the one or more hardware processors (104) are configured to predict the one or more state parameters in the spatio-temporal domain inside the packed bed column, by:
passing the pre-processed input data to the first trained prediction model to obtain a feed gas inlet velocity; and
passing the pre-processed input data, the feed gas inlet velocity, and one or more tuning parameters, to the second trained prediction model, to obtain the one or more state parameters in the spatio-temporal domain inside the packed bed column.

9. The system (100) as claimed in claim 6, wherein the one or more hardware processors (104) are configured to obtain the first trained prediction model, by:
generating a first training input data of the packed bed column using one or more of (i) one or more experiments, and (ii) a physics-based technique, wherein the training input data comprises (i) the inlet temperature of the feed gas, (ii) the inlet pressure of the feed gas, (iii) the one or more properties of each of one or more components of the feed gas, (iv) the outlet pressure of the gas at the exit of the packed bed column, and (v) a labeled feed gas inlet velocity; and
training a first neural network model with the first training input data of the packed bed column to obtain the first trained prediction model.

10. The system (100) as claimed in claim 6, wherein the one or more hardware processors (104) are configured to obtain the second trained prediction model, by:
generating a second training input data of the packed bed column using one or more of (i) one or more experiments, and (ii) a physics-based technique, wherein the second training input data comprises (i) the inlet temperature of the feed gas, (ii) the inlet pressure of the feed gas, (iii) the one or more properties of each of one or more components of the feed gas, (iv) the outlet pressure of the gas at the exit of the packed bed column, (v) the feed gas inlet velocity, (vi) the one or more tuning parameters, and (viii) one or more labelled state parameters; and
training a second neural network model with the second training input data of the packed bed column to obtain the second trained prediction model.

11. One or more non-transitory machine-readable information storage mediums comprising one or more instructions which when executed by one or more hardware processors cause:
collecting, via one or more input/output (I/O) interfaces, an input data of a packed bed column at an initial state with a predefined configuration, using one or more input data retrieval techniques, wherein the input data of the packed bed column comprises one or more of (i) an inlet temperature of a feed gas, (ii) an inlet pressure of the feed gas, (iii) one or more properties of each of one or more components of the feed gas, and (iv) an outlet pressure of a gas at an exit of the packed bed column, wherein the predefined configuration includes one or more of (i) one or more adsorbent properties, (ii) one or more gas properties, and (iii) one or more column dimensions and one or more column properties, and wherein the one or more gas properties comprise (i) a gas temperature, (ii) a gas composition, and (iii) a gas pressure;
pre-processing the input data of the packed bed column using one or more data processing techniques to obtain a pre-processed input data of the packed bed column, wherein the pre-processed input data comprises one or more of (i) a pre-processed inlet temperature of the feed gas, (ii) a pre-processed inlet pressure of the feed gas, (iii) one or more pre-processed properties of each of one or more components of the feed gas, and (iv) a pre-processed outlet pressure of the gas at the exit of the packed bed column;
predicting one or more state parameters in a spatio-temporal domain inside the packed bed column using a first trained prediction model and a second trained prediction model, based on the pre-processed input data, wherein the one or more state parameters comprise an adsorbent temperature, one or more adsorbate concentrations on the adsorbent, the gas temperature, the gas composition, the gas pressure, a gas velocity, a wall temperature of the packed bed column, and the temperature of a jacket enclosing the packed bed column;
post-processing the one or more state parameters to determine one or more key performing indicators (KPIs) of a process and each of one or more process steps of the process associated with the packed bed column, wherein the one or more KPIs are (i) an energy consumption, (ii) a recovery, and (iii)a purity; and
optimizing the one or more KPIs of the process and each of the one or more process steps of the process by varying one or more process parameters of the process, wherein the one or more process parameters comprises a process step-time, a regeneration temperature, a feed gas inlet temperature, a feed gas inlet pressure, and an evacuation pressure.

12. The one or more non-transitory machine readable information storage mediums as claimed in claim 11, wherein the one or more instructions which when executed by one or more hardware processors further cause:
monitoring in real-time periodically the packed bed column, based on a current state and the one or more process parameters of the process; and
fine-tuning one or more tuning parameters of the packed bed column, when a deviation is observed during the monitoring, wherein the one or more tuning parameters comprises a heat transfer coefficient, a mass transfer coefficient, and the predefined configuration.

13. The one or more non-transitory machine readable information storage mediums as claimed in claim 11, wherein predicting the one or more state parameters in the spatio-temporal domain inside the packed bed column, comprising:
passing the pre-processed input data to the first trained prediction model to obtain a feed gas inlet velocity; and
passing the pre-processed input data, the feed gas inlet velocity, and one or more tuning parameters, to the second trained prediction model, to obtain the one or more state parameters in the spatio-temporal domain inside the packed bed column.

14. The one or more non-transitory machine readable information storage mediums as claimed in claim 11, wherein the first trained prediction model is obtained by:
generating a first training input data of the packed bed column using one or more of (i) one or more experiments, and (ii) a physics-based technique, wherein the training input data comprises (i) the inlet temperature of the feed gas, (ii) the inlet pressure of the feed gas, (iii) the one or more properties of each of one or more components of the feed gas, (iv) the outlet pressure of the gas at the exit of the packed bed column, and (v) a labeled feed gas inlet velocity; and
training a first neural network model with the first training input data of the packed bed column to obtain the first trained prediction model.

15. The one or more non-transitory machine readable information storage mediums as claimed in claim 11, wherein the second trained prediction model is obtained by:
generating a second training input data of the packed bed column using one or more of (i) one or more experiments, and (ii) a physics-based technique, wherein the second training input data comprises (i) the inlet temperature of the feed gas, (ii) the inlet pressure of the feed gas, (iii) the one or more properties of each of one or more components of the feed gas, (iv) the outlet pressure of the gas at the exit of the packed bed column, (v) the feed gas inlet velocity, (vi) the one or more tuning parameters, and (viii) one or more labelled state parameters; and
training a second neural network model with the second training input data of the packed bed column to obtain the second trained prediction model.
